# EUROPÄISCHE PATENTSCHRIFT

(11) **EP 1 512 343 B1**
(45) Veröffentlichungstag und Bekanntmachung des Hinweises auf die Patenterteilung: **04.07.2007**
(21) Anmeldenummer: 04021127.8
(22) Anmeldetag: 06.09.2004
(51) Int. Cl.: A47B 37/04, A47B 13/08

(54) **Tisch mit einer Tischplatte**
Table with table top
Table avec plateau de table

(30) Priorität: 06.09.2003 DE 20313862 U; 27.04.2004 DE 202004006755 U
(43) Veröffentlichungstag der Anmeldung: 09.03.2005
(73) Patentinhaber: Siegwarth, Manfred, 78224 Singen-Bohlingen (DE)
(72) Erfinder: Siegwarth, Manfred, 78224 Singen-Bohlingen (DE)
(74) Vertreter: Hiebsch, Gerhard F.

(56) Entgegenhaltungen:
- WO-A-02/087395
- DE-A- 2 347 240
- DE-U- 20 202 518
- US-A- 5 027 718

## Beschreibung

Die Erfindung betrifft einen Tisch aus Holz, Metall, Kunststoff und/oder Glas mit einer gestreckten Tischplatte und diese tragenden Standbeinen.

Tische dieser Art sind beispielsweise als Esstische bekannt, deren Tischplatte gegebenenfalls vom Stamm einer Pflanze durchsetzbar gestaltet ist. Solche Tische sind der Schrift zu DE 202 02 518 U1 der Anmelderin zu entnehmen.

Aus der Schrift zu DE 202 02 518 U1 ist ein Tisch mit einer teilbaren Tischplatte aus Tischplattenteilen bekannt, die in Abstand zu ihrem Plattenrand mit einer Ausnehmung versehen und diese an einer Trennlinie zwischen zwei der Tischplattenteile seitlich zugänglich ausgebildet ist. Beschrieben wird auch ein Tisch mit in Draufsicht viereckiger Platte aus zwei Teilplatten, die Ausnehmung entsteht hier durch den Einbau von Einsatzbrettern zwischen den beiden Plattenhälften. Diese Einsatzbretter sind an die von der Trennlinie bestimmten Trennkanten der Tischplatte angefügt, deren Innenkanten begrenzen -- zusammen mit Abschnitten jener Trennkanten -- die Ausnehmung. Letztere kann zum Teil in einem Einsatzbrett des Tisches vorgesehen sein; zumindest zwei solche Einsatzbretter verlaufen zwischen den Tischplattenteilen und begrenzen die Ausnehmung. Beidseits der Ausnehmung sind an die Plattenunterseiten Winkelgestelle angeschraubt, die jeweils aus einem Hohlprofil mit rechtwinkelig angeformtem Tischbein bestehen. Letzteres kann auch unmittelbar an der Tischunterfläche festgelegt werden.

Die US-A-5 027 718 beschreibt einen Gartentisch mit in Draufsicht oktogonaler Tischplatte und zylindrischemebenfalls oktogonalem -- Durchbruch für einen Baum oder ein entsprechendes säulenartiges Objekt. Von den äußeren Ecken der Tischplatte verlaufen zu den entsprechenden Ecken des. Durchbruchs Kantenlinien. Jeder der von einem Paar dieser Kantenlinien begrenzten Tischplattenteile ist mit vier Standbeinen ausgestattet, die gleichzeitig als Träger horizontaler Kragprofile (outriggers) dienen; die beiden Kragprofile eines -- lösbar an ein anderes grenzenden -- Tischplattenteils tragen in Abstand zu letzterem Querbretter und bilden so ein Art von Sitzbank. Dieser Gartentisch umfasst also die -- aus mehreren jener Tischplattenteile lösbar zuzusammengesetzte -- mehrkantige Tischplatte sowie einen deren außenkontur angepassten Sitzring.

Ein multifunktionales Behältersystem enthält nach WO-A 02/087395 eine diametral zweigeteilte und durch Magnetkraft zusammengehaltene Schüssel mit in zwei Diametralwänden angeordneter zentrischer Büchse. Letztere nimmt einen Schirmstab auf, wenn die Schüssel zentral auf eine runde Tischplatte gestellt und mit Blumen gefüllt wird.

Ein insbesondere für den Gebrauch im Freien vorgesehener Tisch nach DE 23 47 240 A1 bietet eine rechteckige Tischplatte aus Beton mit einer Aussparung zur Aufnahme von Blumenschalen, Grilleinsätzen od. dgl. an, die einem querschnittlich etwa H- oder U-förmig ausgebildeten Betonteil aufliegt, das mit seinen freien Schenkeln an die Unterseite der Betonplatte anschließt.

In Kenntnis dieses Standes der Technik hat sich der Erfinder das Ziel gesetzt, einen Tisch zu konzipieren, der insbesondere in einer natürlichen Umgebung -- diese einbeziehend -- eingesetzt werden kann; es soll ein natürlicher Bezug einer vom erfindungsgemäßen Tisch gebildeten Speisetafel zur Natur hergestellt werden. Zudem soll eine stabile Verbindung von Tischbereichen miteinander hergestellt werden, wobei beispielsweise zwei dieser Tischbereiche beidseits an einen Baum geführt und dann um diesen verbunden werden.

Zur Lösung dieser Aufgabe führt die Lehre des unabhängigen Anspruches; die Unteransprüche geben günstige Weiterbildungen an. Zudem fallen in den Rahmen der Erfindung eine Kombination aus zumindest zwei der in der Beschreibung, der Zeichnung und/oder den Ansprüchen offenbarten Merkmale. Bei angegebenen Bemessungsbereichen sollen auch innerhalb der genannten Grenzen liegende Werte als Grenzwerte offenbart und beliebig einsetzbar sein.

Erfindungsgemäß ist die Tischplatte aus zumindest einem Längsprofil im Bereich ihrer Mittelachse mit einem Rasenstreifen versehen, beidseits dessen jeweils ein Tischplattenstreifen verläuft. Der Rasenstreifen gibt dem gesamten Tisch eine sehr natürliche Note, dies vor allem dann, wenn aus der Rasenoberfläche Blumen empor ragen oder aber der Stamm einer Pflanze bzw. eines Baumes den Rasenstreifen durchgreift. Ein solcher Stamm mag aus

einem unterhalb der -- erfindungsgemäß aus zumindest zwei voneinander trennbaren Abschnitten bestehenden -- Tischplatte angeordneten Kübel ragen und durchsetzt einen Durchbruch in der Tischplatte.

Von besonderer Bedeutung ist eine Ausgestaltung des erfindungsgemäßen Tisches, bei dem in der Mittelachse der Tischplatte ein axialer Schlitz für eine Aufnahmerinne verläuft, in welcher der Rasenstreifen untergebracht werden kann. Dabei soll die Breite der Aufnahmerinne der Breite des Rasenstreifens entsprechen, vorteilhafterweise etwa einem Drittel der Tischplattenbreite. Die Aufnahmerinne untergreift bevorzugt den Schlitz der Tischplatte und soll insbesondere an deren Unterfläche festgelegt sein.

Die Aufnahmerinne wird nach einem weiteren Merkmal der Erfindung aus einem Metallstreifen geformt, kann aber auch aus einem Kunststoffprofil bestehen, und ist an der Unterfläche der Tischplatte lösbar festgelegt. Um das Anbringen der Aufnahmerinne zu vereinfachen, sind an deren Seitenschenkel miteinander fluchtende Horizontalstreifen angeformt, welche der Unterfläche der Tischplatte anliegen und mit dieser verschraubt werden.

Auch ist erfindungsgemäß vorgesehen, die Aufnahmerinne so zu gestalten, dass sie als Teil eines Bewässerungssystems eingesetzt zu werden vermag, was die Blütezeit der Blumen auf der Rasenfläche verlängern hilft. So ergibt sich ein neues Konzept für Tische, dank dessen die Natur zunehmend in den Wohn- und Essbereich der Menschen einzieht.

Im Rahmen der Erfindung liegt es, dass zumindest zwei einander zugeordnete Tischplattenbereiche durch wenigstens einen Profilstab miteinander verbunden sind, der beidseits in miteinander fluchtende Profilräume von gestreckten hohlen Metallprofilen eingreift, von denen jedes an einem anderen der Tischplattenbereiche festgelegt ist. Die Metallprofile und/oder der ihnen angepasste Profilstab sollen insbesondere aus Leichtmetall stranggepresst sein.

Nach einem weiteren Merkmal der Erfindung ist an eine streifenartige Firstplatte des hohlen Leichtmetallprofils in Abstand zu deren Längskanten jeweils ein Wandschenkel angeformt, der andernends in ein Hakenprofil mit endwärtiger Hakenleiste übergeht; beide Hakenleisten begrenzen einen zwischen ihnen verlaufenden Bodenschlitz des Metallprofiles sowie anderseits jeweils eine Längsnut seines Hakenprofils. Das Nutentiefste der Längsnut wird vom Hakenprofil gebildet. Erfindungsgemäß begrenzen die Firstplatte die Wandschenkel und deren Hakenprofile jenen Profilraum.

Dazu hat es sich als günstig erwiesen, dass die Breite des Profilstabes dem inneren Abstand der Wandschenkel des Metallprofils etwa entspricht und die Höhe des Profilstabkörpers geringer ist als der Abstand der Firstfläche des Profilraumes von den Hakenleisten des Hakenprofils; dank dieser Maßgaben ist der Profilstab relativ zu jener Firstfläche anhebbar bzw. absenkbar. Zudem soll die freie Höhe der Hakenleisten über den Nutentiefsten der Höhe der Randleisten des Profilstabes entsprechen.

Zwischen den beiden Randleisten soll eine in Querschnittsmittelachse des Profilstabes angeformte Halsleiste mit zumindest zwei Schraubdurchbrüchen für jeweils eine Schraube ausgestattet sein. Die freie Stirn dieser -- bevorzugt als Innenmehrkantschraube gestalteten -- Schraube soll in angehobener Druckstellung des Profilstabes der Firstfläche des Profilraumes anliegen. Dank dieser Schrauben des Profilstabes wird dieser an jedem der ihn umfangenden Metallprofile festgelegt.

Außer jenen Schrauben ist am Profilstab und/oder am hohlen Metallprofil wenigstens eines der Tischbeine einends festgelegt; dieses ist zudem längenveränderlich ausgebildet, beispielsweise mit einem am Profilstab eines Rohres des Tischbeines verschiebbar und festlegbar angeordneten Fuß versehen.

Bei einer bevorzugten Ausführung greift der Profilstab in zwei unterhalb jeweils einer Hälfte eines Rundtisches angeordnete Metallprofile ein und verbindet die etwa durch einen Diametralspalt getrennten Tischhälften. Ist der Rundtisch in an sich bekannter Weise mit einem zentrischen Durchbruch ausgestattet, soll in dem kreisförmigen Durchbruch eine Scheibe aus zwei einander zugeordneten Halbscheiben eingesetzt werden können, die mit einem sie beidseits übergreifenden Flachprofil versehen sind; dessen freie Enden sind dem Diametralspalt des Rundtisches zugeordnet und in diesen haltend einsetzbar gestaltet.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1, 2:: jeweils eine Schrägsicht auf einen Tisch mit rechteckiger Tischplatte;
- Fig. 3:: einen Ausschnitt aus der vergrößerten Stirnansicht des Tisches der Fig. 2;
- Fig. 4:: eine Stirnansicht eines Verbindungsprofils für den Tisch;
- Fig. 5:: die Draufsicht auf einen Tisch mit scheibenartiger Tischplatte;
- Fig. 6:: den vergrößerten Teilquerschnitt durch Fig. 5 nach deren Linie VI-VI;
- Fig. 7:: ein Ergänzungselement für den Tisch der Fig. 5 in Draufsicht.

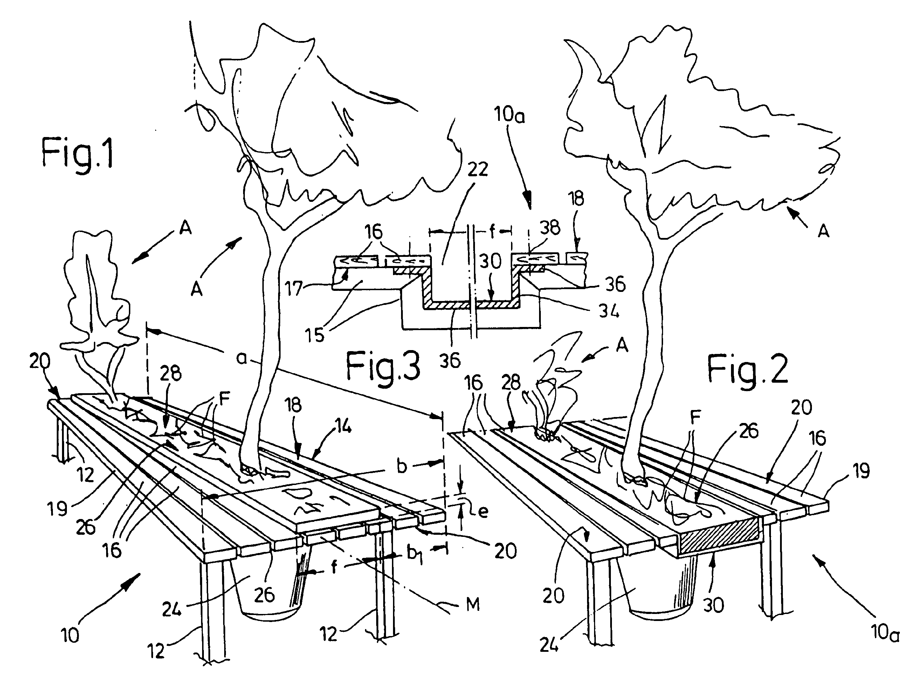

Ein aus Holz, Metall, Kunststoff und/oder Glas geformter Tisch 10 weist gemäß Fig. 1 auf vertikalen Stand- oder Tischbeinen 12 rechteckigen Querschnittes eine etwa horizontal ausgerichtete Tischplatte 14 der Länge a und der Breite b aus mehreren parallelen Längsprofilen 16 rechteckigen Querschnitts auf, in deren -- parallel zu den Längskanten 19 verlaufender -- Mittelachse M nicht erkennbare Ausnehmungen für Stämme A von Bäumen B oder anderen Pflanzen vorgesehen sind. Letztere sind mit ihren Wurzeln unterhalb der Tischunterfläche 17 in Kübeln 24 angeordnet.

In jener Mittelachse M verläuft auf der Oberfläche 18 der Tischplatte 14 bzw. der Längsprofile 16 ein Rasenstreifen 26 geringer Höhe e sowie der Breite f, welch letztere etwa einem Drittel der Tischbreite b von beispielsweise 100 cm entspricht. Von der Rasenoberfläche 28 ragen Blumen F auf.

Beidseits des Rasenstreifens 26 ist jeweils eine Auflagefläche oder ein Tischplattenstreifen 20 bevorzugt gleicher Breite b₁ vorgesehen, welcher der Aufnahme von -- nicht dargestelltem -- Geschirr, Besteck und dgl. zu dienen vermag. Die Breite b₁ des Tischplattenstreifens 20 entspricht etwa der Breite jenes Rasenstreifens 26.

Dieser Tisch 10 bietet dem Benutzer zwischen seinen beiden gestreckten Auflageflächen 20 eine sehr natürliche Dekoration an. Die an dieser Tafel Sitzenden erleben also unmittelbar vor sich die Natur.

Der Tisch 10ₐ nach Fig. 2, unter dessen Tischplatte 14 in Fig. 3 Querriegel 15 zu erkennen sind, ist in seiner Mittelachse M -- unterhalb eines axialen Schlitzes 22 der Breite f₁ -- mit einer Aufnahmerinne 30 für jenen Rasenstreifen 26 versehen, dessen Rasenoberfläche 28 hier mit der Tischoberfläche 18 etwa fluchtet. Die innere Breite der Aufnahmerinne 30 entspricht der Breite f₁ des über ihr verlaufenden Tischschlitzes 22. Nicht gezeigt ist, dass die Aufnahmerinne gegebenenfalls an ein Bewässerungssystem angeschlossen zu werden vermag.

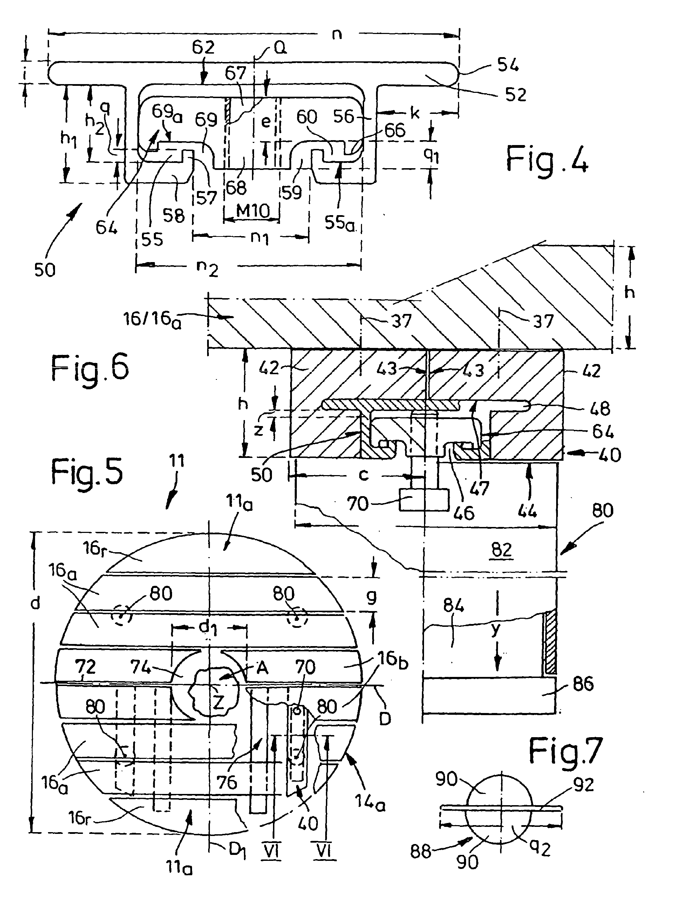

Die i.w. querschnittlich U-förmige Aufnahmerinne 30 ist an ihren -- beidseits des Rinnenbodens 32 -- aufragenden Seitenschenkeln 34 nach außen hin mit angeformten Horizontalstreifen 36 ausgestattet, die an die Tischunterfläche 17 bei 37 angeschraubt sind. In seitlichem Abstand zu den Längskanten 38 der Horizontalstreifen 36 sind -- zu diesen parallel -- an der Tischunterfläche 17 Profilelemente 40 beispielsweise durch Schrauben 38 festgelegt, welche dem Anschluss weiterer Tischabschnitte dienen und deren Aufbau zu Fig. 6 beschrieben ist.

Das als Anschlussprofil dienende Profilelement 40 weist zwei Profilstäbe 42 etwa quadratischen Querschnitts der beispielsweisen Höhe h und Breite c von 45 mm aus Holzgegebenenfalls auch aus einem Kunststoff -- auf, die an ihren aneinanderliegenden Längswänden 43 mit jeweils einer Eckausnehmung 46 zur formschlüssigen Aufnahme eines Leichtmetallprofils 50 versehen sind. Die -- zur Bodenfläche 44 der Profilstäbe 42 parallele -- Firstfläche 47 der Eckausnehmungen 46 setzt sich beidseits letzterer in jeweils einem Seitenschlitz 48 fort, die etwa in Höhenmitte der Profilstäbe 42 angeordnet sind und -- unten beschriebeneflache Kragelemente des Leichtmetallprofils 50 aufnehmen.

Das stranggepresste Leichtmetallprofil 50 weist gemäß dem Querschnitt der Fig. 4 an einer streifenartigen Firstplatte 52 der Querschnittslänge n von 76 mm und der Dicke i von 4 mm in beidseitigem Randabstand k von 15 mm zu deren Längskanten 54 querschnittlich L-förmige Wandschenkel 56 der Länge h₁ von 19 mm auf, an deren freie Endkante ein Hakenprofil 58 rechtwinkelig angeformt ist. Die -- zur Firstplatte 52 weisenden -- endwärtigen Hakenleisten 57 der beiden Hakenprofile 58 der freien Höhe q von 2,5 mm begrenzen einen Bodenschlitz 59 der Weite n₁ von 21 mm; der innere Abstand n₂ der Wandschenkel 56 voneinander misst 41 mm. Dieses Maß entspricht der Breite eines von den Wandschenkeln 56 seitlich begrenzten Profilraumes 60 der Höhe h₂ von etwa 14 mm, in den jene beiden Hakenleisten parallel zur Profilmittelachse Q einragen; letztere bildet auch die Symmetrieachse des Querschnitts.

Der Profilraum 60 dient der Aufnahme eines ihn ihm verschiebbaren Profilstabes 64, von dessen streifenförmigem Körper der Höhe e₂ von etwa 8 mm querschnittlich beidends jeweils eine Randleiste 66 parallel zur Symmetrieachse Q abragt sowie in dieser -- zwischen den Randleisten 66eine mittige Hakenleiste 68 mit Schraubdurchbruch 67. Jene Höhe e₂ ist kürzer als der Abstand der Firstfläche 62 des Profilraumes 60 von der Oberfläche der Hakenleiste 57, so dass ein Bewegungsraum gegeben ist einer Höhe z von etwa 4 mm.

Die Höhe q der Randleisten 66 entspricht der freien Höhe q der benachbarten Hakenleisten 57, und sie begrenzen mit der mittigen Halsleiste 68 der freien Höhe q₁ von etwa 4 mm jeweils eine Längsnut 69 im Profilstab 64 zur Aufnahme einer der Hakenleisten 57 des Leichtmetallprofils 50. Entsprechend begrenzen letztere -- zusammen mit deren jeweiligen Wandschenkel 56 -- eine Längsnut 55, in welche die Randleiste 66 des Profilstabes 64 eingreift. Die Randleiste 66 bzw. die Hakenleiste 57 liegen -- wie Fig. 6 verdeutlicht-- deren jeweils benachbarten Nutengrund 69ₐ bzw. 55ₐ an, wenn der Profilstab 64 durch eine ihn parallel zur Symmetrieachse Q durchsetzende Druckschraube 70 auf jene Hakenleisten 57 gedrückt wird. In dieser Position drückt die freie Stirn der bevorzugt als Innenmehrkantschraube ausgebildeten Druckschraube 70 gegen die Firstfläche 62 des Profilraums 60.

In Einbaulage des Leichtmetallprofils 50 gemäß Fig. 6 greifen die in Kraglänge k von 15 mm querschnittlich abragenden Seitenbereiche der Firstplatte 52 in die oben beschriebenen Seitenschlitze 48 der Eckausnehmungen 46 der beiden Profilstäbe 42 ein, und die Außenflächen der Hakenprofile 58 fluchten mit den Bodenfläche 44 der aus Holz gefertigten Profilstäbe 42.

Um zwei Tischplatten 14 axial miteinander zu verbinden, wird in die beiden miteinander fluchtend angeordneten Leichtmetallprofile 50 ein gemeinsamer Profilstab 64 eingeschoben und durch die erwähnten Schrauben 70 in beschriebener Weise fixiert.

Mit diesem Haltesystem können auch zwei an der Diametrallinie D der Fig. 5 aneinandergefügte Tischhälften 11ₐ eines Rundtisches 11 des Durchmessers d von etwa 130 cm bzw. von dessen Tischplatte 14ₐ verbunden werden. Jede dieserdurch einen Diametralspalt 72 begrenzten -- Tischhälften 11ₐ einer Dicke von 45 mm weist drei parallele Bretter 16ₐ, 16_{b} der beispielsweisen Breite g von 14 cm auf sowie ein äußeres Stirnbrett 16ᵣ mit teilkreisförmiger Außenkante. Die Dicke h dieser Bretter 16ₐ, 16_{b}, 16ᵣ entspricht der erwähnten Höhe h von 45 mm der Profilstäbe 42.

In das jeweils der Diametrallinie D benachbarte Brett 16_{b} ist ein Teil eines dem Tischzentrum Z zugeordneten Durchbruchs 74 des Durchmessers d₁ von 30 cm eingebracht, so dass es in zwei Teilbereiche getrennt ist. Dieser Durchbruch 74 dient der Aufnahme eines Baumstammes A, dem die beiden Tischhälften 11ₐ zugeführt werden und den sie nach ihrer Installation als Rundtisch 11 umfangen.

Die Bretter 16ₐ. 16_{b}, 16ᵣ jeder Tischhälfte 11ₐ sind durch zwei Stabprofile 76 verbunden, die in Abstand parallel zu einer im rechten Winkel zur Diametrallinie D durch das Tischzentrum Z gelegte Mittellinie D₁ an der Unterfläche der Tischhälfte 11ₐ festgelegt sind. Neben den Stabprofilen 76 ist in Fig. 5 jeweils eines der oben erörterten Profilelemente 40 zu erkennen; wie beschrieben, werden die fluchtenden Profilelemente 40 zweier Tischhälften 11ₐ durch den eingeschobenen Profilstab 64 und dessen Schrauben 70 festgelegt.

Im Falle des Rundtisches 11 ist an jedem der beiden miteinander fluchtenden Profilelemente 40 ein Tischbein 80 aus einem Rohr 82 einends festgelegt. In das freie Ende dieses Rohres 82 ist ein Rohrstutzen 84 eines tellerartigen Fußes 86 eingeschoben; der Rohrstutzen 84 kann in unterschiedlichen Positionen -- Ausschubrichtung y -- festgelegt und so das Tischbein 80 verlängert werden.

Im Falle einer Nutzung des Rundtisches 11 ohne dessen Tischplatte 14ₐ durchsetzenden Pflanzenstamm A kann der Durchbruch 74 mit einer passenden Scheibe 88 geschlossen werden. Diese besteht aus zwei Scheibenhälften oder Halbscheiben 90, die zwischen sich ein Flachprofil 92 einschließen; dessen Länge q₂ so gewählt ist, dass es beidends auf den Stabprofilen 76 aufliegt.

## Patentansprüche

1. Tisch aus Holz, Metall, Kunststoff und/oder Glas mit einer Tischplatte (14) und diese tragenden Standbeinen (12),
**dadurch gekennzeichnet,**
**dass** die Tischplatte (14) aus zumindest einem Längsprofil (16) im Bereich ihrer Mittelachse (M) mit einem Rasenstreifen (26) versehen ist, beidseits dessen jeweils ein Tischplattenstreifen (20) verläuft.

2. Tisch nach Anspruch 1, **dadurch gekennzeichnet, dass** der Rasenstreifen (26) vom Stamm (A) einer Pflanze (B) durchgriffen ist, welcher die Tischplatte (14) durchsetzt.

3. Tisch nach Anspruch 1 oder 2, **dadurch gekennzeichnet, dass** in der Mittelachse (M) der Tischplatte (14) ein axialer Schlitz (22) für eine Aufnahmerinne (30) verläuft.

4. Tisch nach einem der Ansprüche 1 bis 3, **gekennzeichnet durch** eine etwa einem Drittel der Tischbreite (b) entsprechende Breite (f bzw. f₁) des Rasenstreifens (26) bzw. des Schlitzes (22) in der Tischplatte (14).

5. Tisch nach Anspruch 4 oder 5, **dadurch gekennzeichnet, dass** die Aufnahmerinne (30) den Schlitz (22) der Tischplatte (14) untergreift.

6. Tisch nach Anspruch 5, **dadurch gekennzeichnet, dass** die Aufnahmerinne (30) an der Unterfläche (17) der Tischplatte (14) festgelegt sowie bevorzugt mit dieser lösbar verbunden ist.

7. Tisch nach Anspruch 6, **dadurch gekennzeichnet, dass** von Seitenschenkeln (34) der Aufnahmerinne (30) Horizontalstreifen (36) zur Anlage an die Unterseite (17) der Tischplatte (14) abragen.

8. Tisch nach einem der Ansprüche 3 bis 7, **dadurch gekennzeichnet, dass** die Aufnahmerinne (30) aus metallischem Werkstoff geformt oder ein Kunststoffprofil ist.

9. Tisch nach einem der Ansprüche 3 bis 8, **dadurch gekennzeichnet, dass** die Aufnahmerinne (30) an ein Bewässerungssystem anschließbar ausgebildet ist.

10. Tisch nach einem der Ansprüche 1 bis 9, **dadurch gekennzeichnet, dass** zumindest zwei einander zugeordnete Bereiche der Tischplatte (14) durch wenigstens einen Profilstab (64) miteinander verbunden sind, der beidseits in miteinander fluchtende Profilräume (60) von gestreckten hohlen Metallprofilen (50) eingreift, von denen jedes an einem anderen der Tischplattenbereiche festgelegt ist.

11. Tisch nach einem des Ansprüche 1 bis 9, **dadurch gekennzeichnet, dass** die Tischplatte aus zumindest zwei voneinander trennbaren Abschnitten (11ₐ) mit Durchbruch (74) für eine Pflanze (B) besteht sowie zumindest zwei einander zugeordnete Tischplattenabschnitte durch wenigstens einen Profilstab (64) miteinander verbunden sind, wobei der Profilstab (64) beidseits in miteinander fluchtende Profilräume (60) von gestreckten hohlen Metallprofilen (50) eingreift, von denen jedes an einem anderen der Tischplattenabschnitte festgelegt ist.

12. Tisch nach Anspruch 10 oder 11, **dadurch gekennzeichnet, dass** die Metallprofile (50) und/oder der Profilstab (64) als stranggepresstes Leichtmetallprofil ausgebildet sind/ist.

13. Tisch nach Anspruch 10 oder 11, **dadurch gekennzeichnet, dass** an eine streifenartige Firstplatte (52) des Metallprofils (50) in Abstand (k) zu deren Längskanten (54) jeweils ein Wandschenkel (56) angeformt ist, der andernends in ein Hakenprofil (58) mit endwärtiger Hakenleiste (57) übergeht, wobei beide Hakenleisten einen zwischen ihnen verlaufenden Bodenschlitz (59) des Metallprofiles sowie anderseits jeweils eine Längsnut (55) seines Hakenprofils (58) begrenzen.

14. Tisch nach Anspruch 13, **dadurch gekennzeichnet, dass** das Nutentiefste (55ₐ) der Längsnut (55) vom Hakenprofil (58) gebildet ist, und/oder die Firstplatte (52), die Wandschenkel (56) sowie die Hakenprofile den Profilraum (60) begrenzen.

15. Tisch nach einem der Ansprüche 10 bis 14, **dadurch gekennzeichnet, dass** die Breite (n₂) des Profilstabes (64) dem inneren Abstand der Wandschenkel (56) des Metallprofils (50) etwa entspricht und die Höhe (e₂) des Körpers des Profilstabes geringer ist als der Abstand der Firstfläche (62) des Profilraumes (60) von den Hakenleisten (57) des Hakenprofils (58).

16. Tisch nach einem der Ansprüche 13 bis 15, **dadurch gekennzeichnet, dass** die freie Höhe (q) der Hakenleiste (57) über den Nutentiefsten (55ₐ) der Höhe (q) von Randleisten (66) des Profilstabes (64) entspricht

17. Tisch nach einem der Ansprüche 13 bis 16, **dadurch gekennzeichnet, dass** eine in der Querschnittsmittelachse (Q) des Profilstabes zwischen den Randleisten angeformt verlaufende Halsleiste (68) mit Schraubdurchbruch (67) für eine Schraube (70) vorgesehen ist.

18. Tisch nach Anspruch 16 oder 17, **dadurch gekennzeichnet, dass** die freie Stirn der Schraube (70) in Druckstellung des Profilstabes (64) der Firstfläche (47) des Profilraumes (60) anliegt.

19. Tisch nach einem der Ansprüche 12 bis 18, **dadurch gekennzeichnet, dass** am Metallprofil (50) und/oder am Profilstab (64) wenigstens eines der Tischbeine (12, 80) einends festgelegt ist.

20. Tisch nach Anspruch 19, **dadurch gekennzeichnet, dass** das Tischbein (80) längenveränderlich ausgebildet und/oder im freien Ende eines Rohres des Tischbeines (80) ein Fuß (86) verschiebbar und festlegbar angeordnet ist.

21. Tisch nach einem der Ansprüche 11 bis 18, **dadurch gekennzeichnet, dass** der Profilstab (64) in zwei unterhalb jeweils einer Hälfte (11ₐ) eines Rundtisches (11) angeordnete Metallprofile (50) eingreift und die durch einen Diametralspalt (72) getrennten Tischhälften verbindet.

22. Tisch nach Anspruch 21, **gekennzeichnet durch** einen zentrischen Durchbruch (74) des Rundtisches (11) im Bereich von dessen Diametralspalt (72), wobei gegebenenfalls in dem kreisförmigen Durchbruch eine Scheibe (88) aus zwei einander zugeordneten Halbscheiben (90) eingesetzt ist mit einem sie beidseits übergreifenden Flachprofil (92), dessen freie Enden dem Diametralspalt zugeordnet und in diesen haltend einsetzbar gestaltet sind.

## Claims

1. Table made of wood, metal, plastic and/or glass, comprising a table top (14) and supporting legs (12) therefor, **characterised in that** the table top (14) consisting of at least one longitudinal section (16) is provided in the region of its centre axis (M) with a strip of grass (26) along either side of which a respective table top strip (20) extends.

2. Table according to claim 1, **characterised in that** the strip of grass (26) is penetrated by the stalk (A) of a plant (B) which passes through the table top (14).

3. Table according to claim 1 or claim 2, **characterised in that** an axial slot (22) for a receiving trough (30) extends along the centre axis (M) of the table top (14).

4. Table according to one of claims 1 to 3, **characterised by** a width (f or f₁) of the strip of grass (26) or of the slot (22) in the table top (14) corresponding approximately to a third of the width (b) of the table.

5. Table according to claim 4 or claim 5, **characterised in that** the receiving trough (30) engages below the slot (22) in the table top (14).

6. Table according to claim 5, **characterised in that** the receiving trough (30) is secured to the underside (17) of the table top (14) and is preferably removably connected thereto.

7. Table according to claim 6, **characterised in that** horizontal strips (36) for bearing against the underside (17) of the table top (14) project from side flanges (34) of the receiving trough (30).

8. Table according to one of claims 3 to 7, **characterised in that** the receiving trough (30) is made from metallic material or is a plastic profile.

9. Table according to one of claims 3 to 8, **characterised in that** the receiving trough (30) is designed in such a manner that it can be connected to an irrigation system.

10. Table according to one of claims 1 to 9, **characterised in that** at least two associated regions of the table top (14) are connected together by at least one shaped member (64) engaging on both sides in aligned shaped spaces (60) of elongated hollow metal sections (50), each of which is secured to another of the regions of the table top.

11. Table according to one of claims 1 to 9, **characterised in that** the table top consists of at least two separable portions (11ₐ) having an opening (74) for a plant (B) and at least two associated table top portions are connected together by at least one shaped member (64), the shaped member (64) engaging on both sides in aligned shaped spaces (60) of elongated hollow metal sections (50), each of which is secured to another of the portions of the table top.

12. Table according to claim 10 or claim 11, **characterised in that** the metal sections (50) and/or the shaped member (64) is/are designed as extruded light-metal sections.

13. Table according to claim 10 or claim 11, **characterised in that** a respective wall flange (56) is moulded on to a strip-shaped top plate (52) of the metal section (50) at a distance (k) from the longitudinal edges (54) thereof and at its other end turns into a hooked section (58) with an end shoulder (57), the two shoulders delimiting a bottom slot (59) of the metal section extending between them and, on the other side, a respective longitudinal groove (55) of the hooked section (58) thereof.

14. Table according to claim 13, **characterised in that** the bottom (55ₐ) of the longitudinal groove (55) is formed by the hooked section (58), and/or the top plate (52), the wall flanges (56) and the hooked sections delimit the shaped space (60).

15. Table according to one of claims 10 to 14, **characterised in that** the width (n₂) of the shaped member (64) corresponds approximately to the internal spacing of the wall flanges (56) of the metal section (50) and the height (e₂) of the body of the shaped member is smaller than the distance of the top surface (62) of the shaped space (60) from the shoulders (57) of the hooked section (58).

16. Table according to one of claims 13 to 15, **characterised in that** the free height (q) of the hook tongue (57) above the bottom (55ₐ) of the groove corresponds to the height (q) of shoulders (66) of the shaped member (64).

17. Table according to one of claims 13 to 16, **characterised in that** a shoulder (68) moulded on between the shoulders along the cross-sectional centre axis (Q) of the shaped member is provided with a screw hole (67) for a screw (70).

18. Table according to claim 16 or claim 17, **characterised in that** the free face of the screw (70) bears against the top surface (47) of the shaped space (60) when pressure is applied to the shaped member (64).

19. Table according to one of claims 12 to 18, **characterised in that** at least one of the table legs (12, 80) is secured at one end to the metal section (50) and/or to the shaped member (64).

20. Table according to claim 19, **characterised in that** the table leg (80) is designed to be of variable length and/or one foot (86) is arranged in such a manner that it can be displaced and secured in the free end of a tube of the table leg (80).

21. Table according to one of claims 11 to 18, **characterised in that** the shaped member (64) engages in two metal sections (50) each arranged below one half (11ₐ) of a round table (11) and connects the table halves separated by a diametrical gap (72).

22. Table according to claim 21, **characterised by** a central opening (74) in the round table (11) in the region of its diametrical gap (72), a disc (88) consisting of two associated half-discs (90) possibly being inserted into the circular opening, with a flat section (92) the free ends of which are associated with the diametrical gap and are designed in such a manner that they can be inserted and held therein extending beyond it on either side.

## Revendications

1. Table en bois, métal, matière plastique et/ou verre, comportant un plateau (14) et des pieds (12) supportant celui-ci,
**caractérisée en ce que** le plateau (14) formé par au moins un profilé longitudinal (16) est muni dans la zone de son axe médian (M) d'une bande de gazon (26), de part et d'autre de laquelle s'étend respectivement une lame de plateau (20).

2. Table selon la revendication 1, **caractérisée en ce que** la bande de gazon (26) est traversée par le tronc (A) d'une plante (B) qui passe à travers le plateau (14).

3. Table selon la revendication 1 ou 2, **caractérisée en ce qu'**une fente axiale (22) pour une goulotte de réception (30) s'étend dans l'axe médian (M) du plateau (14).

4. Table selon l'une quelconque des revendications 1 à 3, **caractérisée par** une largeur (f et f₁), correspondant à peu près au tiers de la largeur (b) de la table, pour la bande de gazon (26) ou respectivement la fente (22) dans le plateau (14).

5. Table selon la revendication 4 ou 5, **caractérisée en ce que** la goulotte de réception (30) s'engage en dessous de la fente (22) du plateau (14).

6. Table selon la revendication 5, **caractérisée en ce que** la goulotte de réception (30) est fixée contre la face inférieure (17) du plateau (14) et, de préférence, est assemblée de manière amovible à celui-ci.

7. Table selon la revendication 6, **caractérisée en ce que** des bandes horizontales (36), destinées à venir en appui contre la face inférieure (17) du plateau (14), forment saillie sur les branches latérales (34) de la goulotte de réception (30).

8. Table selon l'une quelconque des revendications 3 à 7, **caractérisée en ce que** la goulotte de réception (30) est formée dans un matériau métallique ou est un profilé en matière plastique.

9. Table selon l'une quelconque des revendications 3 à 8, **caractérisée en ce que** la goulotte de réception (30) est réalisée de manière à pouvoir être raccordée à un système d'irrigation.

10. Table selon l'une quelconque des revendications 1 à 9, **caractérisée en ce qu'**au moins deux zones du plateau (14), associées l'une à l'autre, sont reliées l'une à l'autre par au moins une barre profilée (64), qui s'engage sur les deux côtés dans des cavités profilées (60), alignées entre elles, dans des profilés métalliques (50) creux allongés, dont chacun est fixé à une autre zone du plateau de table.

11. Table selon l'une quelconque des revendications 1 à 9, **caractérisée en ce que** le plateau de table est formé par au moins deux parties (11ₐ), séparables l'une de l'autre, comportant une ouverture débouchante (74) pour une plante (B), et au moins deux parties du plateau associées l'une à l'autre sont reliées l'une à l'autre par au moins une barre profilée (64), ladite barre profilée (64) s'engageant sur les deux côtés dans des cavités profilées (60), alignées entre elles, dans des profilés métalliques (50) creux allongés, dont chacun est fixé à une autre zone du plateau.

12. Table selon la revendication 10 ou 11, **caractérisée en ce que** les profilés métalliques (50) et/ou la barre profilée (64) sont/est réalisée(s) sous forme de profilé en métal léger extrudé.

13. Table selon la revendication 10 ou 11, **caractérisée en ce que**, contre une plaque supérieure (52) en forme de lame du profilé métallique (50), est formée à une distance (k) de chaque arête longitudinale (54) de celle-ci respectivement une branche latérale (56), dont l'autre extrémité se prolonge par un profil en crochet (58) avec des rebords de crochet (57) au niveau des extrémités, les deux rebords de crochet (57) délimitant une fente inférieure (59) du profilé métallique, laquelle s'étend entre eux, et, sur l'autre côté, respectivement une fente longitudinale (55) de son profil en crochet (58).

14. Table selon la revendication 13, **caractérisée en ce que** le fond (55ₐ) de la rainure longitudinale (55) est formé par le profil en crochet (58), et/ou la plaque supérieure (52), les branches latérales (56), ainsi que les profils en crochet (58) délimitent la cavité profilée (60).

15. Table selon l'une quelconque des revendications 10 à 14, **caractérisée en ce que** la largeur (n₂) de la barre profilée (64) correspond à peu près à la distance intérieure entre les branches latérales (56) du profilé métallique (50), et la hauteur (e₂) du corps de la barre profilée est inférieure à la distance entre la surface supérieure (62) de la cavité profilée (60) et les rebords de crochet (57) du profil en crochet (58).

16. Table selon l'une quelconque des revendications 13 à 15, **caractérisée en ce que** la hauteur libre (q) des rebords de crochet (57) au-dessus du fond (55ₐ) de la rainure correspond à la hauteur (q) des rives (66) de la barre profilée (64).

17. Table selon l'une quelconque des revendications 13 à 16, **caractérisée en ce que**, dans l'axe médian (Q) de la section de la barre profilée, est prévue une latte à collets (68) qui s'étend en étant formée entre les rives (66) et est munie d'un trou débouchant taraudé (67) pour une vis (70).

18. Table selon la revendication 16 ou 17, **caractérisée en ce que**, dans la position de pression de la barre profilée (64), la face frontale libre de la vis (70) est en appui contre la surface supérieure (47) de la cavité profilée (60).

19. Table selon l'une quelconque des revendications 12 à 18, **caractérisée en ce qu'**au moins un des pieds de table (12, 80) est fixé à une extrémité contre le profilé métallique (50) et/ou contre la barre profilée (64).

20. Table selon la revendication 19, **caractérisée en ce que** le pied de table (80) est réalisé de manière variable en longueur et/ou une base (86), qui peut être déplacée et fixée, est agencée dans l'extrémité libre d'un tube formant le pied de table (80).

21. Table selon l'une quelconque des revendications 11 à 18, **caractérisée en ce que** la barre profilée (64) s'engage dans deux profilés métalliques (50), agencés chacun en dessous d'une moitié (11a) d'une table ronde (11), et relie les deux moitiés de table séparées par une fente diamétrale (72).

22. Table selon la revendication 21, **caractérisée par** une ouverture débouchante (74) centrale de la table ronde (11) dans la zone de la fente diamétrale (72), sachant que, le cas échéant, dans l'ouverture débouchante circulaire est inséré un disque (88), formé par deux demi-disques (90) associés l'un à l'autre et comportant un profilé plat (92), qui est en saillie de part et d'autre desdits demi-disques et dont les extrémités libres sont associées à la fente diamétrale et sont conçues pour être insérées de manière bloquée dans cette dernière.
